**Europäisches Patentamt**

**European Patent Office**

**Office européen des brevets**

(19)

(11) Publication number: **0 186 960**
**B1**.

(12) # EUROPEAN PATENT SPECIFICATION

(45) Date of publication of patent specification: **07.03.90**

(51) Int. Cl.[5]: **G 01 N 21/88**

(21) Application number: **85308350.9**

(22) Date of filing: **15.11.85**

(54) **Method for inspecting an optical fiber.**

(30) Priority: **24.12.84 JP 279335/84**

(43) Date of publication of application:
**09.07.86 Bulletin 86/28**

(45) Publication of the grant of the patent:
**07.03.90 Bulletin 90/10**

(84) Designated Contracting States:
**DE FR GB NL**

(56) References cited:
**FR-A-2 389 883**
**US-A-4 360 268**
**US-A-4 391 517**

**PATENT ABSTRACTS OF JAPAN, vol. 6, no. 38
(P-105)916r, 9Th March 1982 & JP-A-56-155 828**

**PATENT ABSTRACTS OF JAPAN, vol. 8, no. 58
(P-261)1495r, 16th March 1984 & JP-A-58-208
639**

**PATENT ABSTRACTS OF JAPAN, vol. 8, no. 204
(P-301)1641r, 18th September 1984 & JP-A-59-
90027**

(73) Proprietor: **SUMITOMO ELECTRIC INDUSTRIES
LIMITED**
**No. 15, Kitahama 5-chome Higashi-ku**
**Osaka-shi Osaka 541 (JP)**

(72) Inventor: **Yoshida, Noriyuki Osaka Works**
**Sumitomo Elec. Industries Ltd. 1-3 Shimaya**
**1-chome**
**Konohana-ku Osaka (JP)**
Inventor: **Takahashi, Kenichi Osaka Works**
**Sumitomo Elec. Industries Ltd. 1-3 Shimaya**
**1-chome**
**Konohana-ku Osaka (JP)**

(74) Representative: **Evans, David Charles et al**
**F.J. CLEVELAND & COMPANY 40-43, Chancery
Lane**
**London, WC2A 1JQ (GB)**

(56) References cited:
**ELECTRONICS LETTERS, vol. 19, no. 5, March
1983, pages 165-166, London, GB; D.C. TRAN et
al.: "Rayleigh scattering in fluoride glass optical
fibres"**

Courier Press, Leamington Spa, England.

**Description**

This invention relates to a method for inspecting an optical fiber to detect defects of the optical fiber at the time of fabrication.

Glassy fibers now form a main source of optical fibers and have a great deal of advantages. However crystalline fibers are now being developed. Crystalline fibers are liable to suffer from occurrences of local defects on fabrication accidentally or inevitably.

An easy and reliable method for discovering local defects of optical fibers on fabrication has been earnestly desired.

A purpose of the invention is to provide a method for inspecting the existence of local defects of an optical fiber on fabrication.

Another purpose of the invention is to provide a method for inspecting the local defects of an optical fiber with high resolution.

Another purpose of the invention is to provide a method for inspecting the local defects of an optical fiber in a short inspecting time.

This invention provides a method for inspecting the local defects of an optical fiber on fabrication continuously.

Conventional methods for inspecting optical fibers—glassy optical fibers or crystalline optical fibers—can only be applied to separated optical fibers with both free ends. An inspecting light enters to one free end and emits from the other free end of the optical fiber.

When a light is introduced into one end of an optical fiber, the light propagates through the optical fiber to the other end. However, if there are some defects in the optical fiber, some portions of the light scattered by the defects return to the incident end.

The distance between the incident end and the defect spot can be calculated by the delay time of the back-scattered light.

Another conventional method of inspection is to introduce the inspecting lights from the side surfaces of optical fibers and to analyze the pattern of the forward-scattered light or the back-scattered light. The pattern of scattered light, which is defined as the power distribution of light along a diameter of an end surface of an optical fiber, teaches us the fluctuation of refractive index of the optical fiber. The distribution of defects is known by the fluctuation of refractive index.

The first conventional method is a suitable method to inspect the defect in optical fibers longer than tens of kilometers.

The second conventional method is an advantageous method to inspect a distribution refractive index of an optical fiber in detail.

However, there has been no widely applicable method for inspecting defects of the optical fibers which have just been fabricated. The conventional methods require a detector and a light source to be placed at both free ends of optical fiber. The optical fiber which is being fabricated has not both ends but has only one end. The conventional method cannot be applied on the fiber without both free ends.

As an alternative to these conventional methods, it has been proposed to inject light into a moving fiber and then to collect and analyse the scattered light by means of an integrating sphere. However each of the methods proposed suffers from one or more limitations.

In Patent Abstracts of Japan Vol. 6, No: 38, p. 105, a proposal is made where light is emitted from the heated mass from which the fiber originates, for subsequent collection and measurement in an integration sphere. In this method the light emission cannot be controlled; and the method cannot necessarily be applied to other fiber fabrication methods such as crystal growth where the heat for fabrication may be inappropriate.

A second integration sphere method is disclosed in Patent Abstracts of Japan Vol. 8, No: 58, p. 261, but in this case also, the method of light injection is based on that emitted by the molten glass at high temperature. This method also cannot be applied to other fiber fabrication methods.

Furthermore neither of these methods can be applied to inspection of a running fiber at any time other than when it is being manufactured.

A third integration sphere method is disclosed in Patent Abstracts of Japan Vol. 8, No: 204, p. 301.

In this case light is injected through a lens system at right angles to the running optical fiber. While it is true that the light passes quite easily into the fiber, most of the light then passes out again on the other side and very little light can pass down the fiber and into an integration sphere distanced further down the fiber path.

The present invention overcomes these limitations and is a method of inspecting an optical fiber during fabrication, which comprises drawing the optical fiber from a fiber fabrication apparatus to a winding device through an integration sphere having an inlet opening, an outlet opening, an inner diffuse reflection surface and a photodetector, shooting a light beam emitted from a light source at the optical fiber, measuring the light powers existing in the integration sphere by the photodetector and estimating the positions and extents of defects by the time and amount of change of output power of the photodetector, characterised in that the light source shoots a strong light beam obliquely at the side surface of the running optical fiber and, at a point distanced from the light source, the integrating sphere collects and measures light scattered from within the optical fiber.

With this arrangement the method can be applied regardless of the fiber fabrication technique employed, high precision can be achieved since control of the light emission is maintained, and the light is efficiently introduced into the fiber so that there will be high sensitivity in the measurement at the integration sphere distanced further along the fiber.

For this purpose an integration sphere with a detector is mounted to enclose a portion of the running optical fiber. A light source which is distanced from the integration sphere emits a strong light obliquely to the running optical fiber.

Some portion of the emitted light penetrates into the fibre core. A portion of the light is scattered by minor defects in the fibre core. Some portion of the scattered light propagates in the fiber core. This is the inspecting light. If a significant defect exists in the propagating path of the fiber core, the defect scatters the inspecting light out of the fiber.

When the defect point is running in the integration sphere with a detector, the scattered light is emitted from the defect within the integration sphere.

The detector mounted in the integration sphere is detecting all light energy which exists within the integration sphere. If the fiber has no defect within the integration sphere, very little of the propagating light is emitted from the fiber core to the integration sphere. In this normal case the output power of the detector is small.

On the contrary the increase of the output power of the detector signifies that there are defects in the portion of the fiber which exist within the integration sphere at that moment.

Thus these detecting device enables us to detect local defects with a high accuracy.

This invention can be used for inspecting defects in infrared optical fibers. Thus the crystalline fibers include three types of fibers—silver halides, thallium halides and alkali halides. Silver halides contain AgBr, AgCl and mixture crystals of AgBr and AgCl. Thallium halides contain TlBr, TlCl, TlI, KRS-5 and KRS-6 (mixture of thallium halides). Alkali halides contain CsBr, CsI, NaCl and KCl. All these materials have high transparencies for infrared lights. Thus the optical fibers fabricated from the materials can be used for the transmission of infrared light.

The glassy fibers mean chalcogenide glass fibers e.g. As-S, Ge-S, etc. The preform of the glassy fibers is of course vitreous. After fiber is fabricated by drawing an end portion of the preform heated above the softening temperature.

In the case of crystalline fibers—silver halides, thallium halides and alkali halides, two methods of fabrication are known. One is an extrusion method. Other is a crystal growth method.

In the extrusion method a single-crystallized preform heated at a certain temperature is extruded into an optical fiber. Due to the mechanical stress at the extrusion, the optical fiber becomes not a single crystal but a poly-crystal. The advantage of the extrusion method is the high speed of fabrication.

In the crystal growth method, a material melt in a crucible is heated above the melting point. A single-crystallized fiber is grown from the melt. Two methods are available. One is a pulling up method and another is a pulling down method.

The pulling up method is only a version of a Czochralski method or an EFG method. A seed crystal with a diameter same with the fiber is dipped and pulled up slowly. A single-crystallized fiber is being drawn continuously.

In the pulling down method the crucible has a small opening at its bottom, the material melt is draining from the opening. The draining melt becomes a single-crystallized fiber.

The speed of crystal growth in both methods is about several millimeters per minute. The advantage of the crystal growth method is the high quality of the fiber which is a single crystal with few defects.

These fabrication methods are well known. This invention is able to be applied on any of these known fabrication methods.

The optical fiber (4) drawn from the fiber fabrication apparatus (6) is being wound at a constant speed by a winding device (7). A light source (1) which is placed between the fiber fabrication apparatus (6) and the winding device (7) shoots a light beam obliquely at the just-fabricated optical fiber (4).

The light source is either of gas lasers, semiconductor lasers or lamps. A He—Ne laser is also available. The light source must emit a strong light beam.

Because the light beam is launched obliquely against the fiber, some portion of the light beam is injected into the fiber and propagates in it.

The reason why the light beam is obliquely launched will be explained. Instead of oblique launching if the light beam was launched vertically into the fiber, as in the prior art described previously, the light beam penetrates into the fiber more easily because the reflectivity is smaller. However the vertical beam passes fully through the fiber and does not stay in the fiber core, despite its easy penetration. The vertical beam therefore does not propagate along the fiber core unless some defects exist in the fiber core and they scatter the beam in the longitudinal direction.

If the launching angle between the fiber axis and the beam axis is reduced from the right angle, the light power which is reflected at the fiber surface is increasing. In practice much of the light power is reflected at the fiber surface in the case of an oblique launching.

A small portion of the light power does gain access to the fiber core. However much of the light which once gains access to the core does not stay in the fiber core as a propagating light but passes out of the fiber.

However a small portion of the light power can be converted to a propagating light owing to scattering defects. Because the portion of light power which is converted into a propagating light is small, strong power is required as a light source.

If there was a perfect optical fiber with no loss, no light would leak out of the fiber core. No leakage from the core to the outer space signifies no effective injection of light from the outer space to the core according to the reciprocal principle of light propagation.

However all optical fibers fabricated by the methods above-mentioned have some losses due to minor defects. Thus the oblique launching is able to inject some portion of light as a propagating light into the core, because fiber cores inevitably have some defects.

The light power scattered out of the core increases at a bent portion of fiber. Thus it is more effective to form a bent or curved portion of fiber and to launch the light to the bent portion. The following is a description by way of example only and with reference to the accompanying drawings of methods of carrying the invention into effect.

In the drawings:—

Figure 1 is a schematic view of the apparatus for inspecting optical fibers as an embodiment of the invention.

Figure 2 is a graph of the change of the output Y of the detector as a function of the position X of defects.

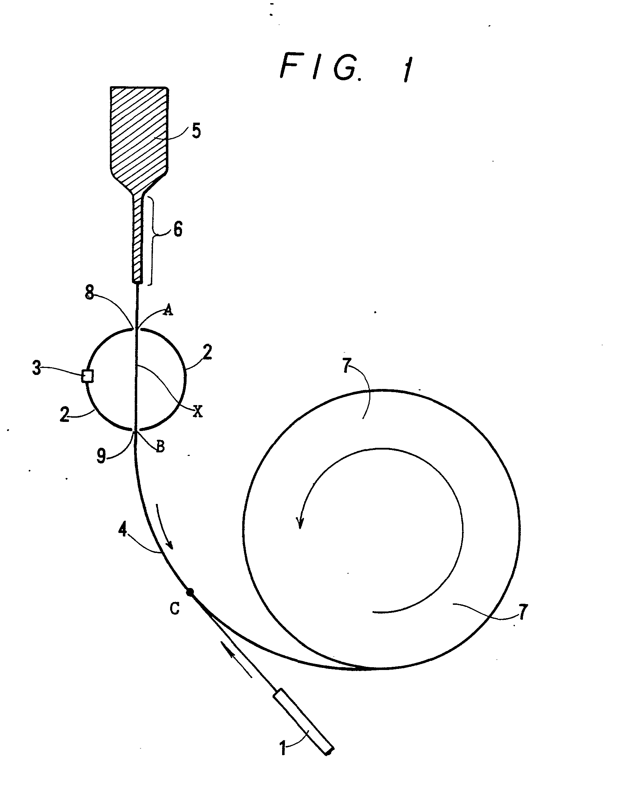

In Figure 1, a preform (5) is continuously being drawn into an optical fiber (4) by a fiber fabrication apparatus (6). The preform (5) signifies either of a glassy preform and a crystalline preform.

Here the fiber fabrication apparatus (6) means an extrusion machine in the case of the crystalline preform. The fiber fabrication apparatus (6) means a drawing machine in the case of the glassy preform.

Of course the preform (5) and the fiber fabrication apparatus (6) are able to be replaced by a material melt and a crystal growth apparatus in the case of crystalline fibers.

An integration sphere (2) is placed at a point distanced from the light source (1) in the running path of the optical fiber (4). The inner surface of the integration sphere (2) is a diffuse reflection surface.

The integration sphere (2) has a small inlet (8) and a small outlet (9). The optical fiber (4) enters into the inner space of the integration sphere (2) through the inlet (8) and egresses there through the outlet (9).

A photodetector (3) is mounted at a point of the inner surface of the integration sphere (2). All lights scattered from the light propagating in the fiber core shoot anywhere on the inner surface of the integration sphere and are reflected diffusely. After several times of reflections all the lights enter into the photodetector. Thus photodetector detects the sum of all light powers which have been generated in the integration sphere (2).

The optical fiber (4) which has passed through the integration sphere (2) is wound by the winding device (7).

The strong light beam emitted from the light source (1) must not enter into the integration sphere (2) through the outlet (9) or inlet (8) directly. Therefore the integration sphere (2) must be distanced from the light source (1). And the outlet (9) or the inlet (8) must deviate from the extension of the light beam emitted from the light source (1).

The functions of the inspection method will be now explained.

In Fig. 1, the position of the optical fiber which is passing through the inlet (8) is denoted by A. The position of the fiber passing through the outlet (9) is denoted by B.

The distance between points A and B is equal to the length of the portion of fiber which exists in the integration sphere (2).

The point at which the light beam emitted from the light source (1) shoots the optical fiber (4) is denoted by C. The optical fiber (4) is passing the points A, B and C in succession.

A very few portion of a strong light beam emitted from the light source (1) is injected into the optical fiber as a propagating light at the point C. This propagating light is called an inspecting light after its role.

The inspecting light propagates from the point C through the points B and A and reaches the preform (5).

If the optical fiber (4) has no defects, the inspecting light would not leak from the optical fiber (4). Thus no light would be emitted within the integration sphere (2).

On the contrary if there are some defects in the optical fiber, the inspecting light is scattered at the defect points. Scattered lights can egress from the fiber core to the outer space, because the directions of scattered lights deviate from the direction of core axis. We suppose safely that the degree of the defects should be in proportion to the total power of the scattered lights.

The point of defect is denoted by X. When the defect point X stays before the inlet point A of the integration sphere (2), the scattering of the inspecting light occurs out of the integration sphere (2). Thus the light power which enters into the photodetector is very small. The detected light power is the small amount corresponding to the normal scattering (e.g. Rayleigh scattering).

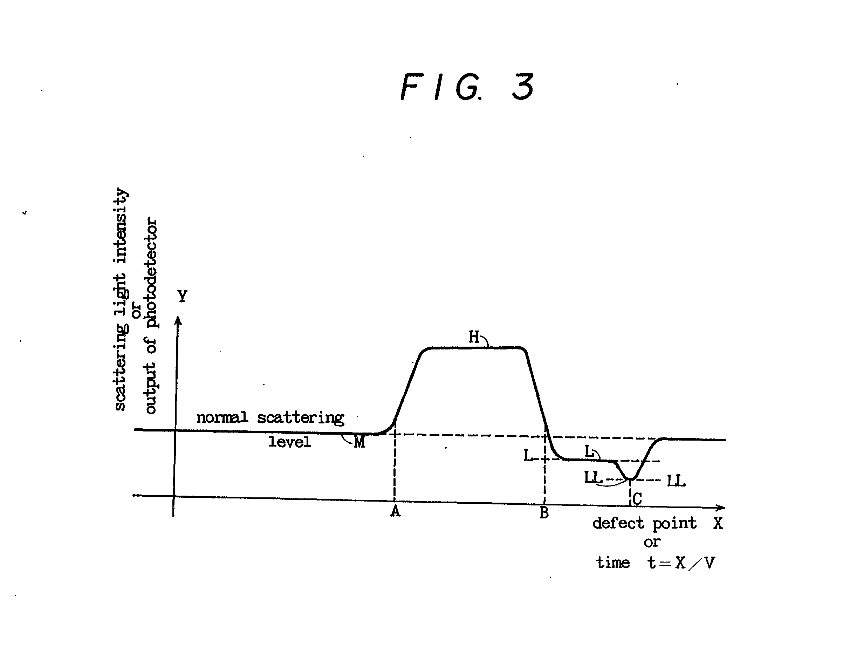

Fig. 2 is a graph showing the output power Y of photodetector as a function of the defect point X.

The output power of the photodetector owing to the normal scattering which happens in a fiber without local defects is denoted by M.

Before the defect point X attains to the point A, the output power Y of the detector is equal to M.

When the defect point X attains to the point A, the output power Y rises to the level H. While the defect point X moves within the integration sphere, the higher level H is kept. Because the defect point X exists in the integration sphere, the lights scattered at X diffuse within the integration sphere and enter into the photodetector. Thus the output power Y rises.

When the defect point X has passed the outlet point B, the defect point X exists between the integration sphere and the light source. The propagating light is scattered at the point X. Because of the scattering loss, the propagating light is reduced at X. Thus the output power Y of the photodetector descends to the level lower than the normal level M.

Furthermore when the defect point X attains to the light incident point C, the amount of injected light (leakage in) decreases. Thus the output power Y of the photodetector is reduced to the bottom level LL lower than the lower level L.

When the defect point X passes over the point C, the output power Y is restored to the normal level M.

The defect point can be detected by the appearance of the higher level H or the bottom level LL with a high accuracy.

When the higher level H is observed, we know there is a defect point between A and B. The accuracy of detection is determined by the diameter AB of the integration sphere. Thus a smaller integration sphere heightens the accuracy of detection.

Otherwise when the bottom level LL is observed, we know a defect point X exists at the light incident point C.

The extent W of the defect is able to be estimated by the difference between the H level and the LL level or between the H level and the M level.

Namely the quantitative estimation of the extent W of the defect is given by

$$W = H - LL \qquad (1)$$

or

$$W = H - M \qquad (2)$$

The explanation abovementioned is a static explanation.

In practice because the optical fiber is being wound by the winding device, it is running at a constant speed V. In this case the abscissa X in Fig. 2 should be replaced by the product Vt, where V is the running speed and t is the time. Then the abscissa shall be deemed as a time axis.

While the defect point X is passing the point A, B and C, the output power Y of the photodetector takes the values M→H→L→LL→M with time.

On the assumption that the initial time $T_0$ for starting to wind the optical fiber and the running speed V of the fiber are already known, from the measured times $T_1$, $T_2$ ... when the changes of the output power Y are observed, the points $X_1$, $X_2$ ... at which some defects exists are calculated by

$$X_j = VT_j \, (j = 1, 2, \ldots) \qquad (3)$$

where j means integers which signify the number of defects.

The advantages of the invention will be now explained.

(1) The positions and extents of the defects in an optical fiber can be detected in a quantitative manner by optical devices.

(2) The structure of the measuring system is simple.

(3) This method does not require any complicated data analysis unlike the measurement of the distribution of refractive index, because the change of the output power Y of the photodetector gives the value of the estimation of the defects by itself.

(4) This method enables us to inspect defects of an optical fiber continuously being fabricated.

This is a very important advantage of this method.

(5) The resolving power can be raised to the order of several tens of centimeters. The diameter of the integration sphere determines the resolving power. If a smaller integration sphere is used, the resolving power of the measurement is raised higher.

(6) This method is capable of high speed inspection. The response speed can be heightened to the intrinsic response speed of the photodetector.

## Claim

A method of inspecting an optical fiber during fabrication, which comprises drawing the optical fiber from a fiber fabrication apparatus to a winding device through an integration sphere having an inlet opening, an outlet opening, an inner diffuse reflection surface and a photodetector, shooting a light beam emitted from a light source at the optical fiber, measuring the light powers existing in the integration sphere by the photodetector and estimating the positions and extents of defects by the time and amount of change of output power of the photodetector, characterised in that the light source shoots a strong light beam obliquely at the side surface of the running optical fiber and, at a point distanced from the light source, the integrating sphere collects and measures light scattered from within the optical fiber.

## Patentanspruch

Verfahren zur Untersuchung einer optischen Faser während der Herstellung, umfassend

—Ziehen der optischen Faser von einer Faserherstellungsapparatur auf einer Aufwickelvorrichtung durch eine Integrationskugel hindurch, die eine Einlaßöffnung, eine Auslaßöffnung, eine diffus reflektierende Innenfläche und einen Photodetektor aufweist,

—Richten eines von einer Lichtquelle emittierten Lichtstrahlenbündels auf die optische Faser,

—Messen der in der Integrationskugel existierenden Lichtstärken mit Hilfe des Photodetektors und

—Beurteilen von Lage und Ausmaß von Defekten durch die Zeit und Größe von Ausgangsleistungsänderungen des Photodetektors, dadurch gekennzeichnet, daß

—die Lichtquelle ein starkes Lichtstrahlenbündel schief auf die Seitenfläche der laufenden optischen Faser richtet, und

—an einer von der Lichtquelle entfernten Stelle die Integrationskugel aus der optischen Faser herausgestreutes Licht sammelt und mißt.

## Revendication

Un procédé d'inspection d'une fibre optique pendant la fabrication, dans lequel on étire la fibre optique à partir d'un appareil de fabrication de fibre, en direction d'un dispositif de bobinage, en la faisant traverser une sphère d'intégration qui comporte un orifice d'entrée, une orifice de sortie, une surface intérieure présentant une réflexion diffuse et un photodétecteur, on projette sur la fibre optique un faisceau lumineux qui est émis par une source lumineuse, on mesure à l'aide du photodétecteur la puissance lumineuse qui est présente à l'intérieur de la sphère d'intégration, et on estime les positions et les importances de défauts sur la base de l'instant et de la valeur de changement de la puissance de sortie du photodétecteur, caractérisé en ce que la source lumineuse projette obliquement un faisceau lumineux intense sur la surface latérale de la fibre optique en mouvement et, à un point situé à une certaine distance de la source lumineuse, la sphère d'intégration collecte et mesure la lumière qui est diffusée à partir de l'intérieur de la fibre optique.

# F I G. 1

*FIG. 3*

scattering light intensity
or
output of photodetector

Y

H

normal scattering
level

M

L

L

LL

LL

C

A

B

defect point  X
or
time   t = X / V